# EUROPEAN PATENT APPLICATION

(11) **EP 4 844 348 A1**
(43) Date of publication of application: **25.11.2026**
(21) Application number: 25305741.8
(22) Date of filing: 22.05.2025
(51) Int. Cl.: G01F 1/704, G01F 1/7086, G06T 7/00

(54) **METHODS AND SYSTEMS FOR DETERMINING FLOW VELOCITY AND MASS FLOW RATE OF A MOLTEN GLASS STREAM**

(71) Applicant: Saint-Gobain Isover, 92400 Courbevoie (FR)
(72) Inventor: CAUSSE, Samuel, 93300 Aubervilliers (FR); DA SILVA ALVES, Carla, 93300 Aubervilliers (FR); MORAVIA, Anaïs, 93300 Aubervilliers (FR)
(74) Representative: Saint-Gobain Recherche

(57) **Abstract**

The invention relates to a method for determining at least one flow velocity of a molten glass stream flowing between an outlet of a glass melting furnace and a molten glass processing system, said method being performed from a set of images of a same stream zone and acquired in distinct acquisition times, and comprising the steps of:
- detecting (E60_1) at least one group of defective particles immersed in the molten glass stream and being present in each image of a pair of images, said detection being performed using an object detection algorithm,
- determining (E60_2) the flow velocity of said at least one detected group of defective particles by determining the displacement of said at least one detected group of defective particles between the acquisition times of each image of the pair of images.

## Description

### Field of the Invention

The present invention relates to the general field of glass manufacturing. More particularly, it relates to a method and a system for determining at least one flow velocity of a molten glass stream between an outlet of a melting furnace and a molten glass processing system. It also relates to a method and a system for determining a mass flow rate of said molten glass stream.

### Technical Background

In the present description, "raw materials" refers to all materials, natural minerals or synthesised products, materials from recycling of the cullet type or of the mineral wool type (in particular stone wool or glass wool) etc., which may be included in the composition used in a melting furnace designed for the manufacture of glass.

Similarly, "glass" refers to glass in the broad sense, *i.e.* including any material with a vitreous, glass-ceramic or ceramic matrix, therefore suitable for instance to produce glass wool or stone wool.

In addition, the term "manufacture" refers to the essential melting stage of the composition and, where appropriate, all the subsequent/complementary stages performed by a molten glass treatment system intended to refine/condition the molten glass with a view to its final shaping, in particular in the form of mineral wool, in particular stone wool or glass wool, used for its thermal or sound insulation properties, or even possibly glass in the form of so-called textile fibres used in reinforcement.

In order to evaluate and regulate glass manufacturing in a dedicated plant, it is necessary to be able to determine with sufficient accuracy the mass flow rate of a molten glass flow between an outlet of a melting furnace and a molten glass treatment system.

Due to operational difficulties (very high temperatures, irregularities in flow geometry), the techniques originally used to determine this mass flow rate were based on indirect measurements either from mass flows of input raw materials, or by weighing of solidified products at later stages of the production line. However, it is known that such indirect mass flow measurements may suffer from poor accuracy, particularly when a significant amount of molten glass is lost between the furnace outlet and a subsequent/complementary stage of manufacture. In addition, such indirect measurements are slow by nature, thus reducing the effectiveness of regulation of glass manufacture.

More recent solutions have therefore been proposed to improve accuracy and processing speed. In particular, it has been proposed to acquire images of the molten glass flow between an outlet of a melting furnace and a molten glass processing system by means of digital cameras, and to perform digital processing using the acquired images to determine the mass flow rate, as described, for example, in the following document (hereinafter referred to as [BSC]): "Optical measurement of high-temperature melt flow rate", Benjamin Bizjan, Brane Širok, Jinpeng Chen, Applied Optics, vol. 57, 4202-4210, May 16, 2018.

However, these more recent solutions have certain disadvantages. Indeed, to determine the mass flow rate, they are essentially based on a simplifying assumption that the shape of the stream of molten glass (more precisely, the area of a section orthogonal to this stream) does not vary. As a result, although there have been gains in accuracy compared with the originally used indirect measurement techniques, these are insufficient for configurations where the shape of the stream is unstable.

Furthermore, it is well known that determining the mass flow rate involves determining the flow velocity of the molten glass stream. However, in these more recent solutions, the determination of this flow velocity is based on the detection of small flow disturbances. Such small perturbations are very complex to detect in the context of a stream whose shape remains stable (*i.e.* due to the aforementioned simplifying assumption), which then requires the deployment of significant computational resources to implement crosscorrelation techniques between images.

### Summary of the Invention

The present invention has been made in the light of the above-mentioned problems with the aim of providing a solution for determining flow velocity and mass flow rate of a molten glass stream in a more efficient way than the solutions of the art.

By "more efficient", it is meant that the solution proposed by the invention is not only more precise, but also consumes fewer computing resources.

To this end, and according to an aspect, the invention provides a method for determining at least one flow velocity of a molten glass stream flowing between an outlet of a glass melting furnace and a molten glass processing system. Said method is performed from a set of images of a same stream zone and acquired in distinct acquisition times, and comprising the steps of:
- detecting at least one group of defective particles immersed in the molten glass stream and being present in each image of a pair of images, said detection being performed using an object detection algorithm,
- determining the flow velocity of said at least one detected group of defective particles by determining the displacement of said at least one detected group of defective particles between the acquisition times of each image of the pair of images.

The method according to the invention for determining at least one flow velocity is particularly advantageous in that it is not based on the detection of disturbances, but on the detection of the groups of defective particles. This avoids the need to implement crosscorrelation techniques, which are particularly demanding in terms of computing resources.

In addition, by relying on the detection of groups of the same particles, the method according to the invention for determining at least one flow velocity is adaptable to any type of glass melting furnace and to any type of glass production, whether the molten glass stream presents disturbances or not.

Finally, and contrary to the prior art, the method according to the invention for determining at least one flow velocity does not rely on the assumption that the area of a section orthogonal to the molten glass stream does not vary, which makes it much more accurate.

A defective particle radiates differently from the molten glass stream, for instance because of its density and/or temperature.

A defective particle can be solid. For instance, it can be a non-molten raw particle or a glass particle.

Alternatively, a defective particle can be fluid. For instance, it can be made of glass having a different composition from the composition of the molten glass stream.

The at least one group of defective particles can comprise solid and/or fluid particles. In particular embodiments, the at least one group of defective particles consists of solid particles.

In particular embodiments, the method for determining at least one velocity may further include one or more of the following features, taken alone or in any technically feasible combination.

According to particular embodiments, the object detection algorithm is a Maximally Stable Extremal Regions algorithm.

As known, regions detected by the MESR algorithm are characterized by their intensity and surrounded by a contrasting background. These regions are considered "stable" because their shapes and contrast remain unchanged over a large range of thresholds. Accordingly, interesting particles for tracking can be identified with the MSER algorithm to select particles that have more chances to remain visible on successive images (i.e. that are "stable"). As groups of defective, and in particular solid, particles have the characteristic of remaining stable over time, the use of MESR algorithm is particularly advantageous in the context of the present invention.

According to particular embodiments, the images of the set of images are acquired along the same line of sight and using a single camera.

According to particular embodiments, the method according to the invention for determining at least one flow velocity comprises acquiring the set of images.

According to particular embodiments, the set of images includes a plurality of images acquired over a given period of time, for example two minutes.

According to particular embodiments:
- a plurality of groups of defective particles are detected, the respective positions of said groups along the flow direction being distinct,
- a flow velocity is determined for each of said detected groups,
the method further comprising a step of determining, using the determined flow velocities, a numerical function providing, for each stream section orthogonal to the flow direction, the flow velocity of the molten glass stream across said section.

According to particular embodiments, the numerical function is determined by linear regression or interpolation, for example by linear interpolation, of the determined flow velocities.

According to particular embodiments, the steps of the method for determining at least one flow velocity are iterated, for example according to a given time step.

According to another aspect, the invention provides a method for determining a mass flow rate Q of a molten glass stream flowing between an outlet of a glass melting furnace and a molten glass processing system. Said method is performed from a set of images comprising:
- a first image and a second image of the same stream zone, acquired simultaneously along two lines of sight by two separate cameras, said two lines of sight being orthogonal to each other and to the flow direction,
- a third image of said stream zone acquired at a later time than said first and second images,
said method comprising a set of steps of:
- determining, using the first and second images, the area A[S] of a section S orthogonal to the flow direction and contained in said stream zone,
- determining the flow velocity V[S] across said section S by:
   ∘performing the method according to the invention for determining at least one flow velocity using images that comprise a pair made of any one of said first or second images as well as the third image, and
   ∘ applying the determined numerical function to the section S,
- determining the mass flow rate Q by multiplying the molten glass density by A[S] and V[S].

The method according to the invention for determining a mass flow rate Q thus inherits the aforementioned advantages from the method according to the invention for determining at least one flow velocity.

In particular embodiments, the method for determining a mass flow rate Q may further include one or more of the following features, taken alone or in any technically feasible combination.

According to particular embodiments, the method further comprises:
- prior to execution of said set of steps, a step of detecting in at least one of the first, second and third images at least one flow disturbance related to the presence of one or more stalactites located at the glass melting furnace outlet, said detection being performed using a machine learning model trained in a supervised manner to detect stalactite disturbances in molten glass flow images, and
- if at least one flow disturbance is detected in at least one of the first, second and third images, a step of determining a confidence score of the determined mass flow rate Q.

A "stalactite" is a solid defect which forms at the outlet of the glass melting furnace and which deforms the glass molten stream. It can be made of solidified glass and notably it can have an elongated shape extending generally along the glass stream flow direction. An elongated stalactite can have an aspect ratio greater than 3, for instance greater than 5, or even greater than 10. The aspect ratio of an elongated stalactite is the ratio of the stalactite length over the stalactite width, as measured on anyone of the first, second and third images.

According to particular embodiments, the method for determining the mass flow rate Q comprises acquiring the images of said set of images.

According to particular embodiments, the third image is acquired by one of the two cameras, the two cameras have the same acquisition frequency, and the acquisition time of the third image is consecutive to the acquisition time of the first and second images relative to said acquisition frequency.

According to particular embodiments, said acquisition frequency is between 10 and 250 Hz, for example equal to 100 Hz.

According to particular embodiments, each camera has an exposure time equal to or less than 20 µs.

According to particular embodiments, the method further comprises, for at least one image referred to as an "initial image" among the first, second and third images, the steps of:
- applying a blurring filter to the initial image, so as to generate a filtered image,
- subtracting the filtered image from the initial image, so as to obtain an image referred to as a "differential image",
- determining the sum of the areas of the particles present in the differential image,
- determining an indicator corresponding to the ratio between the molten glass stream area in the initial image and said sum of the particle areas. According to particular embodiments, the steps of the method for determining the mass flow rate Q are iterated, for example according to a given time step.

According to another aspect, the invention provides a computer program comprising instructions which, when the program is executed by at least one processor, cause said at least one processor to implement steps of a method according to the invention for determining at least one velocity according to the invention or a method for determining a mass flow rate Q.

This computer program may use any programming language, and be in the form of source code, object code, or code intermediate between source code and object code, such as in a partially compiled form.

According to another aspect, the invention provides a computer-readable medium having stored thereon a computer program according to the invention.

The computer-readable medium can be any entity or device capable of storing the computer program. For example, the medium can include storage means such as a ROM, for example a microelectronic circuit ROM, for example a USB key, or magnetic storage means, for example a hard disk.

Alternatively, the computer-readable medium can be an integrated circuit in which the computer program is incorporated, the circuit being adapted to execute a method or to be used in its execution.

Alternatively, the computer-readable medium can be a transmission medium such as an electrical or optical signal, which can be conveyed via an electrical or optical cable, by radio or by any other suitable means.

According to another aspect, the invention provides a system for determining at least one flow velocity of a molten glass stream between an outlet of a melting furnace and a molten glass processing system, said system comprising means configured to perform a method for determining at least one flow velocity according to the invention.

According to another aspect, the invention provides a system for determining a mass flow rate Q of a molten glass stream between an outlet of a melting furnace and a molten glass processing system, said system comprising means configured to perform a method for determining a mass flow rate Q according to the invention.

According to another aspect, the invention provides a glass manufacturing system comprising a melting furnace, a molten glass processing system and a system according to the invention for determining at least one flow velocity or for determining a mass flow rate Q.

Whatever the aspect of the invention, the glass melting furnace can be a submerged burner glass melting furnace.

The invention also relates to a process for manufacturing mineral wool, notably glass wool or stone wall, the process comprising:
- melting raw material in a glass melting furnace, particularly a submerged burner glass melting furnace, such as to obtain molten glass,
- flowing a stream of said molten glass between an outlet of the glass melting furnace and a molten glass processing system to produce the mineral wool from said molten glass stream,
the process comprising determining at least one flow velocity of the molten glass stream by implementing the method according to the invention and/or determining a mass flow rate of the molten glass stream by implementing the method according to the invention.

The process can comprise controlling the raw material feed of the glass melting furnace as a function of the mass flow rate of the molten glass stream determined over a given time interval.

### Brief Description of the Drawings

Further features and advantages of the present invention will become apparent from the following description of certain embodiments thereof, given by way of illustration only, not limitation, with reference to the accompanying drawings in which:
FIG. 1 schematically represents a general high-level view of a particular embodiment of a glass manufacturing system according to the invention;
FIG. 2 is a more detailed representation, in its environment, of the glass manufacturing system of FIG. 1;
FIG. 3 illustrates an example of the hardware architecture of a data processing device included in the glass manufacturing system of FIGs. 1 and 2;
FIG. 4 is a flowchart of a particular embodiment of a determination method according to the invention;
FIG. 5 schematically represents a portion of a molten glass stream as flowing between an outlet of a melting furnace and a molten glass processing system;
FIG. 6 is a schematic representation of images of a molten glass stream to which an object detection algorithm has been applied to detect at least one group of the same glass particles in each of the images;
FIG. 7 is a more particular embodiment of the determination method of FIG. 4;
FIG. 8 is another more particular embodiment of the determination method of FIG. 4.

### Detailed Description of Example Embodiments

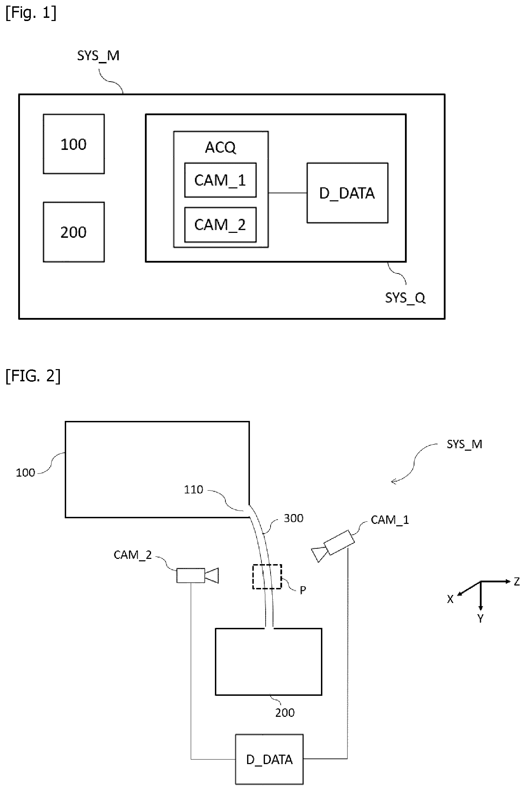

**FIG. 1** schematically represents a general high-level view of a particular embodiment of a glass manufacturing system SYS_M according to the invention.

**FIG. 2** is a more detailed representation, in its environment, of the system SYS_M of FIG. 1.

As shown on FIGs.1 and 2, the system SYS_M comprises a melting furnace 100 (shown in side view) and a molten glass processing system 200.

Melting furnace 100 is configured to melt raw materials (composition, still referred to as "batch") introduced into it, so as to form a melt bath. For example, it may be chosen among a cold top glass melting furnace, a cupola, an electrical furnace, a flame furnace and a submerged burner melting furnace. Although there is no limitation as to the nature of the furnace 100, the invention is particularly well suited for determining the flow velocity and the mass flow rate of a molten glass stream produced by a melting furnace which by design is more likely to generate time disturbances of the flow, such as a submerged burner melting furnace.

The invention is also not limited by the energy source(s) used to melt the raw materials. For example, it may be electrical energy circulating through electrodes plunging into the melt bath from above and/or electrodes fully immersed from side or bottom walls of a furnace vessel. Alternatively, or additionally, combustible energy (e.g. flammable gas) may be used, enabling heating by means of burners arranged above the melt bath and/or immersed.

As already mentioned, the raw materials refer to all materials, natural minerals or synthesised products, materials from recycling of the cullet type or of the mineral wool type (in particular stone wool or glass wool) etc., which may be included in the composition used in a melting furnace designed for the manufacture of glass.

The molten glass is discharged through an outlet 110 of the furnace 100. Said outlet 110 generally comprises a mouth located in the lower zone of the furnace 100, and may optionally be supplemented by an inclined discharge support (not shown in FIGs. 1 and 2).

From this point, the molten glass flows vertically in the form of a molten glass stream 300 to feed the molten glass processing system 200. Said molten glass processing system 200 comprises any suitable device(s)/component(s) for carrying out the steps of refining and/or homogenizing and/or thermal conditioning and/or final shaping of the glass (e.g. fibering machines for stone wool production). These steps are well known to the skilled person and are therefore not described in greater detail here.

As shown on FIGs. 1 and 2, the glass manufacturing system SYS_M further comprises a system SYS_Q comprising means to determine at least one flow velocity of the molten glass stream 300 a mass flow rate Q of the molten glass stream 300, through the execution of a determination method according to the invention and described in more detail later.

More particularly, in the present embodiment, the system SYS_Q comprises acquisition means ACQ as well as a data processing device D_DATA.

The acquisition means ACQ are configured to acquire digital images of a given zone P (i.e. a given portion) of the molten glass stream 300. To this end, the acquisition means ACQ comprise two digital cameras CAM_1, CAM_2 configured to acquire images of said zone P along two respective lines of sight, said two lines of sight being orthogonal to each other and orthogonal to the flow direction.

Referring to the XYZ trihedron illustrated on FIG. 2, it is considered in the present embodiment that the flow direction of the molten glass stream 300 is oriented in the Y direction, and the line of sight of camera CAM_1 (respectively camera CAM_2) is oriented in the X direction (respectively Z direction).

Both digital cameras CAM_1, CAM_2 may be of any type known to the skilled person to perform the image acquisition. By way of example, the two cameras CAM_1, CAM_2 may have the same acquisition frequency, for example between 10 Hz and 250 Hz, more particularly equal to 100 Hz. Each camera CAM_1, CAM_2 may also have an exposure time equal to or less than 500 µs.

It should be noted, however, that these features are not limitative of the invention, and other values of acquisition frequency and/or exposure time may be contemplated. In addition, the two cameras CAM_1, CAM_2 may have different acquisition frequencies.

The acquisition means ACQ may also comprise elements other than those described above, but which are nevertheless not shown in the figures for the sake of legibility.

For example, the acquisition means ACQ may also include optical means (lenses, mirrors, etc.) configured to allow one or both cameras CAM_1, CAM_2 to be positioned away from the melting furnace 100, which is advantageous for minimizing the risk of damaging them with respect to the hot flow, but also for adapting to any congestion in the immediate vicinity of the molten glass stream 300.

The acquisition means ACQ may also include, for example, protection means for the two cameras CAM_1, CAM_2 and any other equipment mentioned above. By "protection", it is meant here that any risk of damage to the equipment is avoided, for example due to splashing molten glass and/or high temperatures.

Generally speaking, the configuration of the acquisition means ACQ for acquiring digital images of the zone P is well known to the person skilled and is therefore not further detailed here. In particular, the person skilled knows how to choose appropriate means, for example from the product catalogues offered by specialist manufacturers. They also know how to position these means to acquire the desired images.

In the present embodiment, the data processing device D_DATA is configured to control the acquisition means ACQ, i.e. to pilot their operation by activating and deactivating them by means of appropriate commands.

The data processing device D_DATA is further configured to perform, from images acquired by the acquisition means ACQ, processing aimed at determining a mass flow rate Q of the molten glass stream 300, by implementing steps of the determination method.

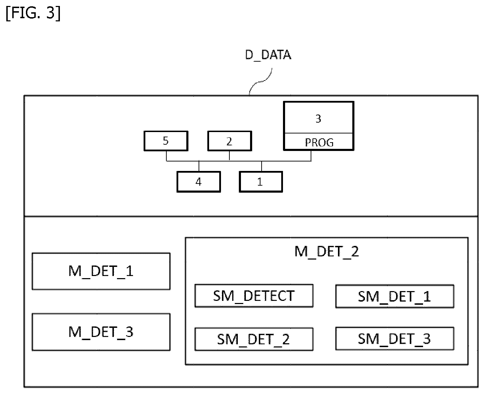

**FIG. 3** illustrates an example of the hardware architecture of the data processing device D_DATA of FIGs. 1 and 2.

The device D_DATA has the hardware architecture of a computer and comprises at least one processor 1, a random access memory 2, a read-only memory 3 and a non-volatile memory 4. It also comprises communication means 5.

The read-only memory 3 of device D_DATA constitutes a storage medium according to the invention, readable by said at least one processor 1 and on which is stored a computer program PROG according to the invention, comprising instructions for executing steps of the determination method. The program PROG defines functional modules of the device D_DATA, which rely on or control the aforementioned hardware elements 1 to 5. These functional modules are illustrated in a non-limiting way on FIG. 3 and described in more detail below with reference to particular embodiments of the determination method.

Communication means 5 enable device D_DATA to receive images from the acquisition means ACQ, which are also equipped with suitable communication means (not shown in the figures). Communication means 5 also enable device D_DATA to transmit commands to the acquisition means ACQ. These communication means 5 are based, in a manner known per se, on a communication interface suitable for such data exchanges. Such an interface can be wired or wireless, so that data can be exchanged using any protocol known to the skilled person.

It should be noted that, although said functional modules are described in the present embodiment as being solely integrated in the device D_DATA, nothing precludes the possibility of said functional modules being distributed in a plurality of electronic devices belonging to the system SYS_Q.

In addition, although it is considered in the present embodiment that the acquisition means ACQ and the device D_DATA form two distinct entities, a single entity grouping together the hardware and software means of said two entities may also be considered.

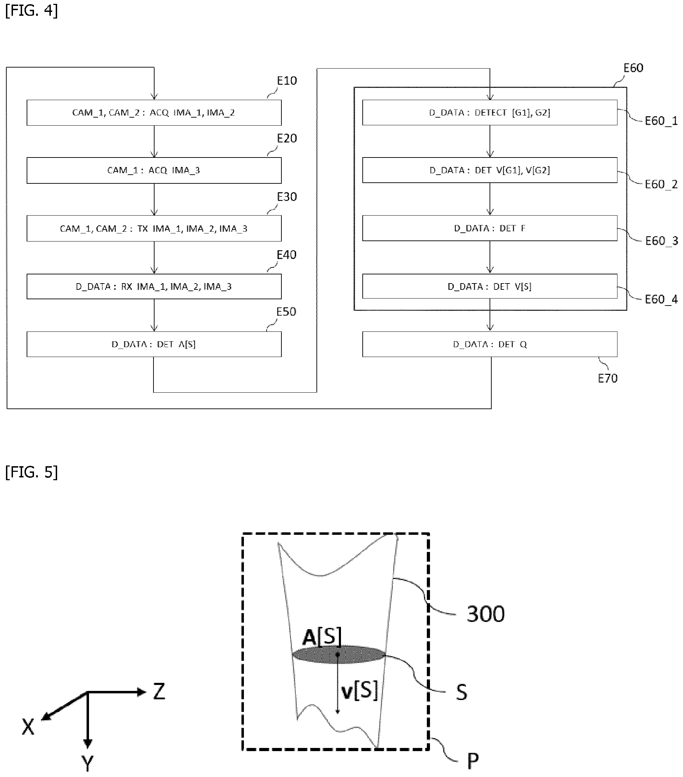

**FIG. 4** is a flowchart of a particular embodiment of the determination method according to the invention, as performed by the system SYS_Q.

As shown on FIG. 4, the determination method comprises a step E10 of simultaneous (synchronized) acquisition of two images IMA_1, IMA_2. Said step E10 is implemented by the acquisition means ACQ, in particular by the two cameras CAM_1, CAM_2 respectively (i.e. image IMA_1 is acquired by camera CAM_1, and image IMA_2 is acquired by camera CAM_2).

There is no limitation on the conditions for triggering said step E10. For example, device D_DATA may have generated and transmitted an appropriate command to each camera CAM_1, CAM_2 to trigger the acquisition of each image CAM_1, CAM_2. The generation and transmission of such a command may be the subject of specific steps included in the determination method.

According to another example, the two cameras CAM_1, CAM_2 may spontaneously (i.e. without the need to receive a command) acquire the images IMA_1, IMA_2, for example at a given acquisition frequency and considering that said cameras CAM_1, CAM_2 are synchronized with each other.

Next to step E10 (i.e. at a date later than the acquisition time of images IMA_1, IMA_2), the determination method comprises a step E20 of acquiring a third image IMA_3 of the zone P. Said step E20 is implemented by the acquisition means ACQ.

More particularly, in the present embodiment, the third image IMA_3 is acquired by one of the two cameras CAM_1, CAM_2, for example by camera CAM_1. Moreover, the acquisition time of the third image IMA_3 is consecutive to the acquisition time of the first and second images IMA_1, IMA_2 relative to the acquisition frequency of the cameras CAM_1, CAM_2.

It is not a limitation of the invention to consider an acquisition time for the third image IMA_3 consecutive to the acquisition time of the first and second images IMA_1, IMA_2 relative to the acquisition frequency of the cameras CAM_1, CAM_2. Indeed, as described below in the context of determining a flow velocity of the molten glass stream 300, the primary concern is that the third image IMA_3 should detect glass particles already present in images IMA_1, IMA_2. In other words, the acquisition times of the various images (and therefore the corresponding acquisition frequencies) must be configured to enable such detection.

Nor is the invention limited by the fact that the third image IMA_3 is acquired by one of the two cameras CAM_1, CAM_2. Indeed, in order to determine at least one velocity of the molten glass stream 300, there is no limitation to the use of a third camera, for example configured with a line of sight distinct from each of the lines of sight associated with the two cameras CAM_1, CAM_2, to acquire this third image IMA_3, at the expense, however, of greater complexity and greater cost in implementing the system SYS_Q.

As shown on FIG. 4, the determination method also includes a step E30 of transmitting the set of images IMA_1, IMA_2, IMA_3 to the device D_DATA. This step E30 is implemented by the communication means of the acquisition means ACQ.

The set of images IMA_1, IMA_2, IMA_3 is then received by the device D_DATA during a step E40 implemented by the communication means 5 of said device D_DATA.

Once all the images IMA_1, IMA_2, and IMA_3 have been acquired and transmitted to the device D_DATA, the determination method comprises a step E50 of determining, using said first and second images IMA_1, IMA_2, the area A[S] of a section S orthogonal to the Y direction of the molten glass stream 300 and contained in the zone P. This step E50 is implemented by a first determination module M_DET_1 of the device D_DATA.

The choice of a specific section S within zone P is not a limitation of the invention. This means that determining the flow velocity across said section S, as detailed below, is in fact equivalent to determining the velocity of each point of the molten glass stream 300 contained in zone P.

**FIG. 5** schematically represents the molten glass stream 300 in the zone P as well as an example of section S. As can be observed, the section S has an elliptical shape. It is conventionally assumed that such an elliptical shape applies to any section orthogonal to the Y direction of the molten glass stream 300. The area A[S] of section S is therefore determined by the minor and major axes a, b of this elliptical shape according to the following formula: $A \left[S\right] = \frac{π \times a \times b}{4}$

Therefore, to determine said area A[S], one of said first and second images IMA_1, IMA_2 is used to determine the length of one of said axes a, b, and the other of said first and second images IMA_1, IMA_2 is used to determine the length of the other of said axes a, b.

There is no limitation as to how the lengths of a, b axes are determined by means of the images IMA_1, IMA_2. Accordingly, any method known to the skilled person may be used. By way of example, the images IMA_1, IMA_2 may be binarized to allow detection of the edges of the molten glass stream 300, and, based on the detection of the edges, determination of the lengths of a, b axes may be performed. For further details, document [BSC] mentioned above may be consulted.

The determination method further comprises a step E60 of determining the flow velocity V[S] across said section S (i.e. the velocity normal to the Y direction). This step E60 is implemented by a second determination module M_DET_2 of the device D_DATA.

The flow velocity V[S] is shown as a vector in FIG. 5, designating the speed at which the particles in section S move as a result of the flow of molten glass.

In its general principle, the determination of flow velocity V[S] according to step E60 uses at least one pair of images of zone P acquired at different times. In other words, in the present embodiment it may be the pair of images (IMA_1, IMA_3) or the pair of images (IMA_2, IMA_3), the choice of any of these pairs being irrelevant.

For simplification purposes only, it is assumed that the pair of images used to determine flow velocity is the pair (IMA_1, IMA_3).

It should be noted that the acquisition of the third image IMA_3 (step E20) has been described as taking place after step E10 and before step E30. However, it is understood that there is no limitation to the acquisition of the third image IMA_3 at any time after the acquisition of images IMA_1, IMA_2 and before the determination of flow velocity V[S].

As illustrated in FIG. 4, step E60 comprises a substep E60_1 of detecting at least one group of the same glass particles in each of the images of the pair (IMA_1, IMA_3). This substep E60_1 is implemented by a detection submodule SM_DETECT of the second determination module M_DET_2.

The detection of the substep E60_1 is performed using an object detection algorithm. In general, any object detection algorithm known to skilled person may be used, provided that it is capable of detecting groups of the same particles between images which follow one another in time.

By way of example, the object detection algorithm is a MSER ("Maximally Stable Extremal Regions") algorithm.

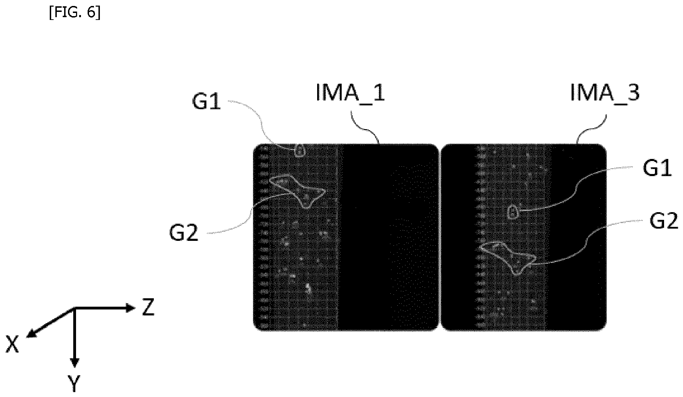

**FIG. 6** is a schematic representation of the images IMA_1 and IMA_3, to which the object detection algorithm, e.g. the MESR algorithm, has been applied. As may be seen on FIG. 6, two distinct groups G1, G2 are identified in each of the two images IMA_1, IMA_3. Group G1 (respectively G2) of image IMA_1 contains the same particles as group G1 (respectively G2) of image IMA_3. Due to the Y direction of the flow, the coordinates of these groups G1, G2 along the Y-axis in image IMA_3 are distinct from those in image IMA_1.

The relative positions of each of these detected groups G1, G2 between the two images IMA_1, IMA_3 therefore give access to the distance they travel between the two acquisition times of said two images IMA_1, IMA_3.

As a result, and as shown on FIG. 4, step E60 further comprises a substep E60_2 of determining a flow velocity V[G1], V[G2] for each of said detected groups G1, G2. This substep E60_2 is implemented by a first determination submodule SM_DET_1 of the second determination module M_DET_2.

In addition, step E60 comprises a substep E60_3 of determining, using the flow velocities V[G1], V[G2], a numerical function F providing, for each stream section orthogonal to the flow direction (i.e. for each section whose points have the same Y coordinate), the flow velocity of the molten glass across said section. This substep E60_3 is implemented by a second determination submodule SM_DET_2 of the second determination module M_DET_2.

By way of example, the numerical function F is determined by linear regression or interpolation, for example by linear interpolation, of the flow velocities V[G1], V[G2].

It is important to note that the example considered above, in which two groups G1, G2 are detected, is not limitative of the invention. In practice, the more groups detected in the images, the more precise the numerical function F is. Also, to favour the detection of a large number of particle groups, the object detection algorithm may be appropriately parameterized to adjust the detection level of particle groups (smaller groups may be more difficult to detect, requiring a higher level of sensitivity, possibly at the expense of increased detection noise).

Alternatively to a change in the object detection algorithm parameters or additionally, the set of images used to determine the flow velocity V[S] may not be limited to a pair of images such as (IMA_1, IMA_3) or (IMA_2, IMA_3). More particularly, said set of images may also include a plurality of images of zone P acquired by camera CAM_1 or camera CAM_2 over a given period of time greater than the time separating the acquisition times of image IMA_1/IMA_2 and image IMA_3. For example, said set of images may include such images accumulated over a period of two minutes prior to the acquisition time of the image IMA_1/IMA_2 or the image IMA_3. In other words, the aim here is to detect groups of particles in images other than images IMA_1, IMA_2, IMA_3, so as to determine their respective velocities, and thus feed the process of determining the function F. It is understood that this approach is particularly advantageous when it can be assumed that, for each fixed position considered in the zone P, the flow velocity of the molten glass stream 300 does not vary (or varies only insignificantly) over time, which is the case in practice (unlike the shape of the molten glass stream 300, which may vary over time).

Finally, step E60 comprises a substep E60_4 of applying the determined numerical function F to the section S so as to obtain the flow velocity V[S] (i.e. F(S) = V[S]). This substep E60_3 is implemented by a third determination submodule SM_DET_3 of the second determination module M_DET_2.

Once the flow velocity V[S] has been determined, and as shown on FIG. 4, the determination method comprises a step E70 of determining the mass flow rate Q by multiplying the molten glass density ρ by A[S] and V[S] (i.e. Q = ρ x A[S] x V[S]). This step E70 is implemented by a third determination module M_DET_3 of the device D_DATA.

Of course, it is understood that the mass flow rate Q corresponds to a mass flow rate associated with section S, and that if another section were considered the mass flow rate might be different.

There is no limitation as to how the molten glass density ρ is obtained. Accordingly, any method known to the skilled person may be used. By way of example, the following document (also quoted in the document [BSC] mentioned) may be consulted: "Properties of Glass-Forming Melts", L. D. Pye, A. Montenero, and I. Joseph, Boca Raton: CRC Press, 2005.

In the present embodiment, and as shown on FIG. 4, the steps E10 to E70 of the determination method are iterated, for example according to a given time step. These iterations, although optional, allow the evolution of the mass flow rate Q to be monitored over time.

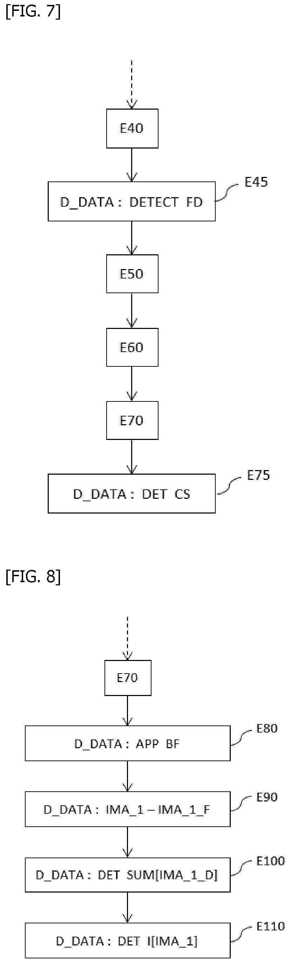

**FIG. 7** is a more particular embodiment of the determination method of FIG. 4.

In the more particular embodiment of FIG. 7, the determination method further comprises, prior to execution of the set of steps E50 to E70, a step E45 of detecting in at least one of the first, second and third images IMA_1, IMA_2, IMA_3 at least one flow disturbance FD related to the presence of one or more stalactites located at the melting furnace outlet 110.

Said detection is performed using a machine learning model trained in a supervised manner to detect stalactite disturbances FD in molten glass flow images.

There is no limitation to the nature of the model or even to the specifics of the training technique.

Moreover, in the embodiment of FIG. 7 and if at least one flow disturbance FD is detected in at least one of the first, second and third images IMA_1, IMA_2, IMA_3, the determination method comprises a step E75 of determining a confidence score CS of the determined mass flow rate Q.

This confidence score CS is derived from the detection performed in step E45, it being understood that a high (respectively low) confidence score CS corresponds to a situation where the probability of the presence of stalactite disturbances FD in at least one image is high (respectively low).

It may be noted that if one or more flow disturbances FD are detected in several images, then a confidence score CS may first be determined for each of said images, and then an overall confidence score OCS may be determined from said confidence scores, for example by averaging.

Optionally, if a confidence score CS (respectively an overall confidence score OCS) is below a given threshold, the associated image (respectively images) can be disregarded in the determination method and new images are acquired.

**FIG. 8** is another more particular embodiment of the determination method of FIG. 4.

In the more particular embodiment of FIG. 8, the determination method further comprises a series of steps performed after determination of the mass flow rate Q and for at least one image referred to as an "initial image" among the first, second and third images IMA_1, IMA_2, IMA_3.

In a non-limiting way, and for the sole purpose of simplifying the description, it is now considered that said series of steps is carried out for a single initial image corresponding to the first image IMA_1.

Thus, as shown in FIG. 8, the determination method comprises a step E80 of applying a blurring filter BF to the initial image, so as to generate a filtered image IMA_1_F. Applying a blurring filter has the effect of smoothing out the "imperfections" in the image IMA_1 resulting from the presence of glass particles.

Next, the determination method comprises a step E90 of subtracting the filtered image IMA_1_F from the initial image IMA_1, so as to obtain an image referred to as a "differential image IMA_1_D". Said differential image IMA_1_D therefore represents only the glass particles within the general shape of the molten glass stream 300.

The determination method further comprises a step E100 of determining the sum SUM[IMA_1_D] of the areas of the particles present in the differential image IMA_1_D.

This step E100 may be performed using any technique known to skilled person, the choice of a particular technique being merely an implementation variant. For example, the differential image IMA_1_D may be binarized so as to highlight only the glass particles with respect to the background (which ultimately amounts to detecting the glass particles in the differential image IMA_1_D), and, once said glass particles have been isolated, evaluate said sum SUM[IMA_1_D] (i.e. evaluate the respective areas of the isolated particles and sum these respective areas).

Once the sum SUM[IMA_1_D] has been determined, the determination method finally comprises a step E110 of determining an indicator I[IMA_1] corresponding to the ratio between the area of the molten glass stream 300 in the image IMA_1 and said sum SUM[IMA_1_D].

Here again, the area of the molten glass stream 300 in the image IMA_1 may be performed using any image processing technique known to skilled person, for example a technique that allows the edges of the molten glass stream 300 to be detected. It is further understood that the area of the molten glass stream 300 may be determined from either the image IMA_1 or the filtered image IMA_1_F.

The indicator I[IMA_1] provides information on the quality of the melt, since a suitable melting process should normally result in a homogeneous flow containing a low number of particles with small respective surface areas.

As mentioned above, steps E80 to E110 have been described for the first image IMA_1 only. However, nothing precludes considering another image (IMA_2 or IMA_3) or applying said steps E80 to E110 for two or three of the images IMA_1, IMA_2, IMA_3. If steps E80 to E110 are applied to several images, several quality indicators are obtained. Optionally, an overall quality indicator may be determined from said plurality of quality indicators, for example by averaging.

In addition, steps E80 to E110 have also been described as being performed after the mass flow rate Q has been determined. However, proceeding in this way is not limitative of the invention, and it is of course possible to consider performing these steps at any time before the mass flow rate Q has been determined, provided that at least one image of the molten glass stream 300 has been acquired.

It should also be noted that the embodiments of FIGs. 7 and 8 have been described above in a separate manner. However, it will be readily apparent that these embodiments may be combined. Further, the iteration of the steps of the determination method as illustrated in FIG. 4 may of course be carried out to include the steps of the embodiment of FIG. 7 and/or the embodiment of FIG. 8.

The invention has been described so far considering a determination of the flow velocity V[S] during the implementation of the method for determining the mass flow rate Q. However, the invention is not limited by these aspects and still covers, as such (i.e. independently of the determination of the mass flow rate Q), a method and a system for determining at least one flow velocity taking up, inter alia, the technical features described above with reference to step E60. In particular, determining the function F from the flow velocities of a plurality of particle groups is only an optional implementation of this method, which also covers the case where only one particle group is detected, and thus only one velocity of this particle group is determined.

Finally, for both the method for determining the mass flow rate Q and the method for determining at least one flow velocity, it may be noted that the execution of the image acquisition steps in the course of these methods (which corresponds to an online implementation) are only optional, and nothing precludes considering that the images are acquired prior to performing said methods and stored for later use (which corresponds to an offline implementation).

## Claims

1. A method for determining at least one flow velocity of a molten glass stream flowing between an outlet of a glass melting furnace and a molten glass processing system, said method being performed from a set of images of a same stream zone and acquired in distinct acquisition times, and comprising the steps of:
- detecting (E60_1) at least one group of defective particles immersed in the molten glass stream and being present in each image of a pair of images, said detection being performed using an object detection algorithm,
- determining (E60_2) the flow velocity of said at least one detected group of defective particles by determining the displacement of said at least one detected group of defective particles between the acquisition times of each image of the pair of images.

2. The method according to claim 1, wherein the object detection algorithm is a Maximally Stable Extremal Regions algorithm.

3. The method according to any one of claims 1 and 2, wherein:
- a plurality of groups of defective particles are detected, the respective positions of said groups along the flow direction being distinct,
- a flow velocity is determined for each of said detected groups,
the method further comprising a step of determining (E60_3), using the determined flow velocities, a numerical function providing, for each stream section orthogonal to the flow direction, the flow velocity of the molten glass across said section.

4. The method according to claim 3, wherein the numerical function is determined by linear regression or interpolation, for example by linear interpolation, of the determined flow velocities.

5. Method for determining a mass flow rate Q of a molten glass stream flowing between an outlet of a glass melting furnace and a molten glass processing system, said method being performed from a set of images comprising:
- a first image and a second image of the same stream zone, acquired simultaneously along two lines of sight by two separate cameras, said two lines of sight being orthogonal to each other and to the flow direction,
- a third image of said stream zone acquired at a later time than said first and second images,
said method comprising a set of steps of:
- determining (E50), using the first and second images, the area A[S] of a section S orthogonal to the flow direction and contained in said stream zone,
- determining (E60) the flow velocity V[S] across said section S by:
∘ performing the method according to claims 3 and 4, using images that comprise a pair made of any one of the first or second images as well as the third image, and
∘ applying the determined numerical function to the section S,
- determining E(70) the mass flow rate Q by multiplying the molten glass density by A[S] and V[S].

6. The method according to claim 5, further comprising:
- prior to execution of said set of steps, a step of detecting (E45) in at least one of the first, second and third images at least one flow disturbance related to the presence of one or more stalactites located at the melting furnace outlet, said detection being performed using a machine learning model trained in a supervised manner to detect stalactite disturbances in molten glass flow images, and
- if at least one flow disturbance is detected in at least one of the first, second and third images, a step of determining (E75) a confidence score of the determined mass flow rate Q .

7. The method according to any one of claims 5 and 6, wherein the third image is acquired by one of the two cameras, the two cameras having the same acquisition frequency, and the acquisition time of the third image is consecutive to the acquisition time of the first and second images relative to said acquisition frequency.

8. The method according to any one of claims 5 to 7, further comprising, for at least one image referred to as an "initial image" among the first, second and third images, the steps of:
- applying (E80) a blurring filter to the initial image, so as to generate a filtered image,
- subtracting (E90) the filtered image from the initial image, so as to obtain an image referred to as a "differential image",
- determining (E100) the sum of the areas of the particles present in the differential image,
- determining (E110) an indicator corresponding to the ratio between the molten glass stream area in the initial image and said sum of the particle areas.

9. The method according to any one of claims 1 to 8, the steps of the method being iterated, for example according to a given time step.

10. A computer program comprising instructions which, when the program is executed by at least one processor, cause said at least one processor to implement steps of:
- the method according to any one of claims 1 to 4 or according to claim 9 combined with any one of claims 1 to 4, or
- the method according to any one of claims 5 to 8 or according to claim 9 combined with any one of claims 5 to 8.

11. A computer-readable medium having stored thereon a computer program according to claim 10.

12. A system for determining at least one flow velocity of a molten glass stream flowing between an outlet of a glass melting furnace and a molten glass processing system, said system comprising means configured to perform the method according to any one of claims 1 to 4 or according to claim 9 combined with any one of claims 1 to 4.

13. A system for determining a mass flow rate Q of a molten glass stream flowing between an outlet of a glass melting furnace and a molten glass processing system, said system comprising means configured to perform the method according to any one of claims 5 to 8 or according to claim 9 combined with any one of claims 1 to 4.

14. Glass manufacturing system comprising a glass melting furnace, in particular a submerged burner glass melting furnace, a molten glass processing system and a system according to claim 12 or a system according to claim 13.

15. Process for manufacturing mineral wool, notably glass wool or stone wall, the process comprising:
- melting raw material in a glass melting furnace, particularly a submerged burner glass melting furnace, such as to obtain molten glass,
- flowing a stream of said molten glass between an outlet of the glass melting furnace and a molten glass processing system to produce the mineral wool from said molten glass stream,
the process comprising determining at least one flow velocity of the molten glass stream by implementing the method according to anyone of claims 1 to 4 and/or determining a mass flow rate of the molten glass stream by implementing the method according to anyone of claims 5 to 8.

16. The process according to the previous claim, comprising controlling the raw material feed of the glass melting furnace as a function of the at least one flow velocity of the molten glass stream and/or as a function of the mass flow rate of the molten glass stream determined over a given time interval.
